# EUROPÄISCHE PATENTSCHRIFT

(11) **EP 2 588 816 B1**
(45) Veröffentlichungstag und Bekanntmachung des Hinweises auf die Patenterteilung: **14.06.2017**
(21) Anmeldenummer: 10728670.0
(22) Anmeldetag: 02.07.2010
(51) Int. Cl.: F28D 20/00, F25B 17/08, F24B 1/188, F24C 5/00, F24B 1/18

(54) **DEKO-OFENSYSTEM ZUM VERBRENNEN VON ETHANOL**
DECORATIVE FURNACE SYSTEM FOR BURNING ETHANOL
SYSTÈME DE CHEMINEE DECORATIVE DESTINÉE À BRÛLER DE L'ÉTHANOL

(43) Veröffentlichungstag der Anmeldung: 08.05.2013
(73) Patentinhaber: SchwoererHaus KG, 72531 Hohenstein-Oberstetten (DE)
(72) Erfinder: SCHWOERER, Roman, 73453 Abtsgmuend (DE); SCHWOERER, Johannes, 72531 Hohenstein (DE)
(74) Vertreter: Witte, Weller & Partner Patentanwälte mbB
(86) Internationale Anmeldenummer: PCT/EP2010/059497
(87) Internationale Veröffentlichungsnummer: WO 2012/000563

(56) Entgegenhaltungen:
- EP-A2- 0 203 558
- EP-A2- 2 015 006
- DE-A1- 10 238 508
- DE-U1- 9 311 514

## Beschreibung

Die Erfindung betrifft ein Brennofensystem in Form eines Deko-Ofens zum Verbrennen von Ethanol, mit einer Brennkammer, die zumindest teilweise von einer Wand umgeben ist, und mit einem bodenseitigen Brenner zum Verbrennen von flüssigem Brennstoff.

Aus der DE 203 04 013 U1 ist ein Kamineinsatz zur Verwendung in einem Kamin bekannt, der ein Brennerteil aufweist, das zum Aufnehmen von flüssigem Brennstoff dient. Der Brenner mit dem flüssigen Brennstoff steht auf einem Boden einer Brennkammer, die von drei Seitenwänden umgeben ist. Zum Betrachter bzw. Benutzer hin ist die Brennkammer entweder offen oder durch eine durchsichtige Tür verschlossen.

Aus der DE 93 11 514 U1 ist ein Heizgerät zur Erwärmung von Brauch- oder Heizwasser mit Brenngasen bekannt. Die Brenngase entstehen durch Verbrennung eines gasförmigen Brennstoffes. Es wird vorgeschlagen, neben dem mit den Brenngasen beaufschlagten Wärmetauscher zur Erwärmung von Heiz- oder Brauchwasser einen Wärmespeicher vorzusehen, der ein an sich bekanntes mit einem Zeolith gefülltes Gefäß aufweist, das über einen Kondensator mit einem Verdampfer verbunden ist. Im sogenannten Heizungsbetrieb schaltet der Brenner ein, um das Heizungswasser im konventionellen Wärmetauscher zu erwärmen. Bei der Brauchwasserbereitung schaltet der Brenner aus oder bleibt außer Betrieb. Das Kaltwasser wird durch den Wärmespeicher geleitet. Durch Aufnahme von Wärme aus dem Zeolith fällt der Wasserdampfpartialdruck des Zeolith/Wasser-Stoffpaares. Als Folge davon absorbiert der Zeolith Wasserdampf aus dem Verdampfer. Hierbei wird die Bindungswärme/Adsorptionswärme im Zeolith freigesetzt, welche dem durchlaufenden Brauchwasser zur Erwärmung zugeführt wird.

In der EP 2 015 006 A1 ist eine Wärmepumpe mit Hohlkörpern mit zumindest zwei Zonen beschrieben, zwischen denen ein Arbeitsmittel reversibel verlagerbar ist.

In der DE 102 38 508 A1 ist eine ähnliche Adsorptionswärmepumpe beschrieben, in der ein Zeolith-Wärmeaustauscher enthalten ist.

Aus der EP 0 203 558 A2 ist ein Verfahren bekannt, bei dem in einer Desorptionsphase Wasserdampf aus einer Zeolith-Füllung als Ergebnis der Erwärmung durch heiße Rauchgase desorbiert wird und in einem benachbarten Kondensator verflüssigt. Der verflüssigte Wasserdampf wird temporär in einen Auffangbehälter gespeichert. In einer Adsorptionsphase wird der verflüssigte Wasserdampf in einen Verdampfer abgeführt und von dort durch das Zeolith adsorbiert, wobei der verflüssigte Wasserdampf wieder verdampft, und zwar in einer solchen Weise, dass Eis durch die direkte Verdampfung von Wasser in dem Verdampfer erzeugt wird.

Kaminöfen mit Brennern, in denen flüssiges Ethanol, insbesondere in Form von Bio-Ethanol, verbrannt werden kann, haben in vergangener Zeit verbreitet Einsatz gefunden, und zwar als so genannte Deko-Öfen.

In solchen Deko-Öfen wird nicht Holz in Form von Holzscheiten verbrannt, sondern es steht ein Brenner mit einer Kassette zur Aufnahme von flüssigem Ethanol auf dem Boden, und das Ethanol, insbesondere Bio-Ethanol, wird verbrannt.

Über den Brenner werden Holzscheitimitate gelegt, die von den Flammen umzüngelt werden.

Dadurch hat man das Erscheinungsbild eines Kaminofens, jedoch ohne die damit verbundenen Nachteile, wie Rauchentwicklung, Asche und dergleichen.

Als Bio-Ethanol bezeichnet man Ethanol, das ausschließlich aus Biomasse, also aus einem nachwachsenden Kohlenstoffträger oder aus den biologisch abbaubaren Anteilen von Abfällen, hergestellt wurde. Ethanol, C₂H₅OH verbrennt mit Sauerstoff zu Kohlendioxid, CO₂, und Wasser, H₂O. Ethanol ist der allgemeine Begriff für Alkohol, früher auch Spiritus oder Weingeist genannt. Man spricht auch von Brennspiritus und/oder Agraralkohol, weil dieser aus Agrarrohstoffen wie Mais und Zuckerrohr gewonnen wird.

Der Kohlenstoffanteil des Ethanols hat einen pflanzlichen Ursprung, wobei der Kohlenstoff in Pflanzen, beispielsweise in Form von Cellulose oder Zucker, durch Assimilation unter Verbrauch von in der Erdatmosphäre vorhandenem Kohlendioxid pflanzlich eingebaut wird. Ethanol entsteht aus kohlenstoffhaltigen Substanzen durch die alkoholische Gärung, ein natürlicher Prozess, der ohne Chemikalien oder dergleichen auskommt. Allgemein unterscheidet man die Herstellung von synthetischem Ethanol, welches aus fossilen Rohstoffen gewonnen wird, und die Herstellung von Bio-Ethanol, welches bei der Vergärung von nachwachsenden Rohstoffen entsteht. Wird nun Bio-Ethanol verbrannt, entstehen die in der Natur vorkommenden Substanzen Wasser und Kohlendioxid, so dass, in der Kohlenstoffbilanz gesehen, ein geschlossener bzw. neutraler Kreislauf besteht.

Hinter der Philosophie derartiger Deko-Öfen, die Bio-Ethanol verbrennen, steht ja nicht nur der Dekorationseffekt, sondern auch der wichtige Umweltaspekt in Form des nachwachsenden Brennstoffes Bio-Ethanol.

Derartige Öfen können ohne Kaminanschluss betrieben werden, da die bei der Verbrennung entstehenden Substanzen Wasser und insbesondere das Kohlendioxid in einem bestimmten Maße auch in geschlossenen Räumen abgegeben werden können. Allerdings ist die Menge an zu verbrennendem Bio-Ethanol nach den zurzeit geltenden Vorschriften auf 0,5 1 pro Stunde begrenzt. Dies soll verhindern, dass sich das für den Menschen ab einem gewissen Konzentrationsmaß giftige Kohlendioxid in den Räumlichkeiten zu stark ansammelt.

In umwelttechnischer Hinsicht sind die Deko-Öfen insofern nicht zufriedenstellend, da die von diesen erzeugte Wärme in die Umwelt abgegeben wird, was energiebilanzmäßig ungünstig ist.

Ferner wurde im praktischen Einsatz festgestellt, dass Ethanol ein nicht unproblematischer Brennstoff ist, der zu unregelmäßigem Abbrennen neigt, insbesondere beim Anfahren des Ofens und beim allmählichen Erlöschen der Flammen aufgrund des Austrocknens des flüssigen Brennstoffes Ethanol. Da üblicherweise der Brennstoff in den Brennstoffkassetten im Inneren des Brennraumes vorhanden ist, regelt sich die Füllstandshöhe nach dem Grad des Abbrandes.

Ethanol hat einen relativ hohen Siedepunkt, ca. 78 °C, so dass bei einem kalten Ofen in der Anlaufphase eine relativ schlechte Verbrennung stattfindet. Bei einem heißen Ofen stellt man fest, dass in der Endphase der Brennstoff unter Verpuffungen und einer relativ starken Geruchsentwicklung abbrennt. In den heißen Brenner kann erst wieder Brennstoff nach einer gewissen Abkühlphase nachgefüllt werden, um Verpuffungen und Verbrennungen zu vermeiden.

Es ist daher Aufgabe der vorliegenden Erfindung, ein Brennofensystem zum Verbrennen von flüssigem Brennstoff, insbesondere Ethanol, zu schaffen, das energiebilanzmäßig günstig arbeitet und sicherheitstechnisch besser betreibbar ist.

Erfindungsgemäß wird die Aufgabe durch ein Brennoffensystem gemäß Anspruch 1 gelöst. Bei diesem Brennofensystem, welches in Form eines Deko-Ofens ausgebildet ist, ist ein abgeschlossenes Paneel vorgesehen, dessen Innenraum unter einem Unterdruck steht und das mit den heißen Verbrennungsgasen in wärmetauschender Verbindung steht, wobei im Innenraum des Paneels ein Adsorptionsmittel aufgenommen ist, das Wasserdampf ansaugt und bei den Temperaturen der Verbrennungsgase wieder abgibt, wobei das Paneel über eine Verbindung mit einem Wasserkondensatbehältnis verbunden ist, wobei bei aktivem Adsorptionsmittel durch Freigeben der Verbindung zwischen Adsorptionsmittel und dem Wasserkondensatbehältnis die Brennkammer vorwärmbar ist, wobei das grob U-förmige Paneel so ausgebildet ist, dass es eine Auskleidung der Brennkammer im Bereich der Seitenwände sowie im Bereich der Rückwand darstellt.

Adsorptionsmittel sind poröse Materialien, die aufgrund ihrer großen inneren Oberfläche bestimmte Moleküle durch physikalische Kräfte an sich binden.

Die erfindungsgemäß eingesetzten Adsorptionsmittel haben die Eigenschaft, Wasserdampf anzusaugen und unter Wärmeabgabe in dessen Kristallstruktur einzubringen. Erfolgt ein solcher Prozess in unter Unterdruck stehenden oder gar luftleeren Behältern, geschieht das Ansaugen des Dampfes von einer Wasseroberfläche mit einer solchen Heftigkeit, dass sich das Wasser im Wasserkondensatbehältnis aufgrund der hohen Verdampfungskälte extrem abkühlt. Diese Adsorption läuft so lange, bis das Adsorptionsmittel mit Wasser gesättigt ist. Im Falle von Wasser als Sorbat sollte der Unterdruck unter 6,1 mbar abgesenkt werden. Dies entspricht dem Dampfdruck von Wasser bei 0 °C.

Durch die Einwirkung von Wärme kann das Wasser wieder aus dem Adsorptionsmittel ausgetrieben werden und in dem Wasserkondensatbehältnis gesammelt werden.

Bekannte Adsorptionsmittel, die diese Eigenschaften zeigen, sind zum Beispiel Zeolithe, Kieselgel, Silicagele, Betonit, Aluminumoxid und Aktivkohle.

Durch Anordnen eines zur Außenseite hin abgeschlossenen Paneels, dessen Innenraum mit einem solchen Adsorptionsmittel gefüllt ist, wird ermöglicht, dass die Wärme der Verbrennungsgase, die mit der in wärmeleitenden Austausch treten können, dazu herangezogen werden kann, das Wasser aus dem Adsorptionsmittel auszutreiben und dem Wasserkondensatbehältnis als kondensiertes Wasser zuzuführen. Somit wird ein Teil der Wärme der Verbrennungsgase nicht ohne weitere Nutzung in die Umwelt abgelassen, sondern zur so genannten Regenerierung eines solchen Adsorptionsmittels herangezogen. Das Paneel kann direkt als Ofenwand dienen, denn dadurch, dass im Inneren ein Unterdruck vorliegt, zeigt das Paneel zur von der Brennkammer abgewandten Seite eine wärmeisolierende Wirkung, was für die Außenseite eines Ofens deswegen wichtig ist, damit man sich daran nicht verbrennt.

Da die von dem Brennstoff Ethanol in solchen Deko-Öfen erzeugte Wärme bei einer Verbrennung von 0,5 1/min nicht mit der Wärme eines brennenden Holzscheites oder eines brennenden Briketts zu vergleichen ist, ist die Ausgestaltung als flächiges Paneel entscheidend dafür, dass eine ausreichende Wärmeaustauschfläche zur Verfügung gestellt wird, um die Wärme von den Verbrennungsgasen auf das Adsorptionsmittel zu übertragen. Wenn größere Mengen an Ethanol oder anderen flüssigen Brennstoffen verbrannt werden, wobei dann ein Kaminanschluss zwingend vorgeschrieben ist, ist der Wärmeaustausch zwischen den heißen Verbrennungsgasen und des Paneels ebenfalls entscheidend, um möglichst viel Wärme den Verbrennungsgasen zu entziehen. Man wird dafür Sorge tragen, dass das Paneel den Flammenherd möglichst weit umrundet und dennoch einen Blick auf die Flammen freilässt, um den Deko-Effekt zu erhalten. Die Verbindung zwischen dem Paneel und dem Wasserkondensatbehältnis ist in dieser Betriebsphase geöffnet, so dass der Wasserdampf von dem Paneel in das Wasserkondensatbehältnis als kondensiertes Wasser überführt werden kann. Nach dem Betrieb wird die Verbindung geschlossen.

Wird die Verbindung zwischen aktiviertem, also wasserfreiem, Adsorptionsmittel und dem Kondensat freigegeben, saugt das Adsorptionsmittel den Wasserdampf derart stark an, dass das Wasser im Wasserkondensatbehältnis sich extrem abkühlt. Gleichzeitig erwärmt sich das Adsorptionsmittel, da der Einbau des Wassers in das Adsorptionsmittel ein exothermer Vorgang ist, der zu einer Erwärmung des Brennraumes zwischen 100 und 130 °C führen kann. Das Wasserkondensatbehältnis kann ein separates Behältnis sein, es kann aber auch durch die Leitungen, die zum Paneel führen, gebildet sein. Das entstehende Kondensat läuft an den Innenwandungen der Leitungen mit Hilfe der Schwerkraft zu einem tiefsten Punkt und sammelt sich dann über einem Ventil, welches ein Kühlaggregat vom Leitungsnetz und dem Innenraum des Paneels trennt. Dann kann ein Ventil zwischen Kondensatbehältnis und Adsorptionskammer weggelassen werden.

Diese Wärme kann nun dazu ausgenutzt werden, die Brennkammer vorzuwärmen, so dass der flüssige Brennstoff relativ rasch und gezielt in die dampfförmige Phase übergeführt werden kann und definiert abbrennt.

Dazu reichen wenige Minuten aus, d.h., wenn man vor dem Anzünden des Ofens eine Verbindung zwischen Adsorptionsmittel und Kondensatbehältnis herstellt, kann der Ofen durch die Adsorptionswärme des Adsorptionsmittels in kurzer Zeit vorgewärmt werden. Ein vorgewärmter Ofen brennt grundsätzlich schneller auf voller Leistung als ein kalter Ofen. Bei dem flüssigen Brennstoff Ethanol kann sofort ein vollständiges Abbrennen auf hohem Leistungsniveau von Anfang an sichergestellt werden, so dass keine Geruchsbelästigung durch nicht verbranntes Ethanol oder nicht verbranntes Vergällungsmittel entsteht.

Bei Brennern, in denen eine größere Menge an Brennstoff vorrätig ist, kann die Wärme auch dazu herangezogen werden, um den Brennstoff vorzuwärmen, um so einen höheren Dampfdruck am Ethanol zu etablieren. Ein vorgewärmter Brenner brennt insbesondere in der Anfangsphase sehr rasch in dem gewünschten Flammenbild, ohne Verpuffungen und ohne die Geruchsbelästigung von unverbranntem Ethanol oder den darin enthaltenen Vergällungsmitteln.

Das in dem Wasserkondensatbehältnis abgekühlte Wasser kann nun zum Kühlen in einem Kühlaggregat herangezogen werden. Somit kann ein Wärmepumpeneffekt erzielt werden, der seine Energie aus den warmen Verbrennungsgasen und den Adsorptionseigenschaften der eingesetzten Adsorptionsmittel holt.

Wird das Ofensystem als Deko-Ofen betrieben und die Menge an verbranntem Ethanol überschreitet die gesetzlich beschränkte Höchstmenge nicht, das sind zurzeit 0,5 1/h, so ist kein Abgas-Schornstein notwendig.

Wird das Ofensystem als Heizsystem eingesetzt, sei es durch Verbrennung von größeren Mengen an Ethanol oder von anderen Brennstoffen, ist ein Abgas-Schornstein zwingend vorgeschrieben.

Der Kreisprozess läuft aber prinzipiell gleich ab.

In der Desorptionsphase läuft der Brenner, das Adsorptionsmittel entnimmt den Verbrennungsgasen Wärme (zum Austreiben des Wassers), die heißen Verbrennungsgase geben Wärme an eine Heißwasserverrohrung ab, und diese wird dem Heizsystem zugeführt.

In der Adsorptionsphase entsteht Kälte im Wasserkondensatbehältnis bzw. Kühlaggregat und Wärme (durch Einbau von Wasser) im Adsorptionsmittel, die wiederum dem Heizungssystem zugeführt werden kann.

Dadurch kann eine Leistungssteigerung von 30 % erreicht werden, und zwar insbesondere durch die in der Kälte gespeicherte Energie.

Das Paneel dient zur Auskleidung der Brennkammer, ohne die Grundkonstruktion des Brennraumes zu beeinflussen oder eine bereits vorhandene Wand zu belassen. Die bei der Verbrennung entstehenden nach oben abströmenden Gase strömen entlang der Wand und können dort für einen intensiven Wärmeaustausch sorgen, der ausreicht, dass das Wasser aus dem Adsorptionsmittel ausgetrieben wird.

In einer weiteren Ausgestaltung der Erfindung weist das Paneel zahlreiche Kanäle auf, über die ein Wassertransport von und zu dem Adsorptionsmittel erfolgt.

Das Vorsehen dieser Kanäle hat den Vorteil, dass der Wasserdampftransport strömungswiderstandsarm und somit in kürzester Zeit erfolgen kann. Wird beispielsweise das Paneel zum Vorwärmen des Ofens eingesetzt, ist die Wärmeentwicklung so rasch und so stark, dass schon in wenigen Minuten die Brennkammer vorgewärmt ist.

In einer weiteren Ausgestaltung der Erfindung weist das Paneel über dessen Höhe gesehen mehrere Kanäle zum Wasserdampftransport auf.

Diese Maßnahme hat den Vorteil, dass die zuvor erwähnte Wasserdampftransportmöglichkeit durch diese Anordnung besonders günstig ablaufen kann. Die Dampfkanäle werden mit einem ausreichend großen Querschnitt versehen, um den exothermen Adsorptionsprozess innerhalb weniger Minuten ablaufen zu lassen. Die vom Wasser aus dem Wasserkondensatbehältnis abgezogenen Wasserdampfmengen sind sehr kalt. Daher wird auch ein entsprechend großer Dampfquerschnitt im Wasserkondensatbehältnis in den Zuleitungen zum Paneel bereitgestellt.

In einer weiteren Ausgestaltung der Erfindung ist im Innenraum des Paneels ein Lochblech eingesetzt, über das der Innenraum in eine Wasserdampfströmungskammer und eine das Adsorptionsmittel enthaltende Kammer getrennt wird.

Dadurch wird ein großes Dampfvolumen an dampfförmigem Wasser ermöglicht und damit der Adsorptionsprozess wesentlich beschleunigt. Dies führt zu kurzen Vorwärmzeiten für die Brennkammer. Kalter Wasserdampf im Vakuum benötigt ein relativ großes Volumen pro Gewichtseinheit, nämlich ca. 210 m³/kg Wasser.

In einer weiteren Ausgestaltung der Erfindung weist das Paneel ein Gehäuse auf, das wärmeleitend ausgebildet ist.

Diese Maßnahme hat den Vorteil, dass durch diese wärmeleitenden Eigenschaften des Gehäuses die Wärme von den Verbrennungsgasen über das Gehäuse auf das Adsorptionsmittel sehr gut übertragen werden kann.

In einer weiteren Ausgestaltung der Erfindung umgibt das Paneel einen vom Brenner erzeugten Flammenherd zumindest um 180°, insbesondere bis zu 270°.

Durch die Ausgestaltung kann ein besonders effizienter Wärmeübergang von den heißen Verbrennungsgasen auf das Adsorptionsmittel in dem Paneel erfolgen.

In einer weiteren Ausgestaltung ist zwischen Paneel und Wasserkondensatbehältnis ein Ventil angeordnet.

Dadurch kann einfach eine Steuerung zum Vorwärmen der Brennkammer erzielt werden. Der Benutzer öffnet das Ventil bei aktiviertem Adsorptionsmittel zum Vorwärmen wenige Minuten vor dem Zünden des Brenners.

In einer weiteren Ausgestaltung der Erfindung ist das Paneel mit zur Brennkammer weisenden wärmeleitenden Lamellen verbunden.

Diese Maßnahme erhöht nunmehr die Wärmetransportleistung auf das Adsorptionsmittel. Dadurch ist es möglich, schon durch kurze Brennerbetriebszeiten das Adsorptionsmittel völlig wasserfrei zu machen, somit hochaktiv zu bringen.

In einer weiteren Ausgestaltung der Erfindung ist das Wasserkondensatbehältnis als Bauteil eines Kühlaggregates ausgebildet.

Diese Maßnahme hat den Vorteil, dass das Wasserkondensatbehältnis, in dem die Kälte erzeugt wird, unmittelbar Teil eines Kühlaggregates ist, so dass die Kälte besonders effizient übertragen werden kann.

In einer weiteren Ausgestaltung der Erfindung ist das Wasserkondensatbehältnis über eine Leitung mit einem Wärmeaustauscher zumindest eines Kühlaggregates verbunden.

Diese Maßnahme hat den Vorteil, dass das Wasserkondensatbehältnis beispielsweise unmittelbar im Bereich des Ofens installiert werden kann, und über die Leitung dann das kalte Wasser irgendeinem Kühlaggregat im Gebäude zugeführt werden kann.

In einer weiteren Ausgestaltung ist das Kühlaggregat ein Kühlschrank, eine Tiefkühltruhe, ein Brennmittelkühler, ein Brenngaskühler, eine häusliche Klimaanlage, ein Kühlakku oder ein sonstiges in einem Gebäude Kälte benötigendes Gerät.

Diese Maßnahme hat den Vorteil, dass die Wärme, die in einem Gebäude durch die Verbrennung entsteht, dazu herangezogen wird, in solchen Gebäuden ablaufende Kühlvorgänge zu bewerkstelligen oder zumindest zu unterstützen. Typische häusliche Geräte sind Kühlschränke, Tiefkühltruhen oder auch Klimaanlagen. Das können auch einzelne Flaschenkühler etc. sein. Der Kältetauscher kann individuell passend zu den zu kühlenden Gegenständen ausgebildet sein. Es ist auch eine Modulbauweise möglich, so dass durch Umstecken wahlweise ein Kühlschrank und danach ein Flaschenkühler oder auch beides an ein Kühlsystem angeschlossen werden kann.

Will man die Abgase nicht in dem heißen Zustand ablassen, kann man diese abkühlen und somit diese mit niedrigeren Temperaturen in die Umwelt entlassen. Die entzogene Wärme kann in ein Heizsystem eingespeist werden.

Ist der Ofen so ausgestaltet, dass eine größere Menge an Brennstoff vorrätig ist, kann die Kälte beispielsweise auch dazu herangezogen werden, ein größeres Brennstoffvorratsbehältnis zu kühlen, so dass keine Ethanoldämpfe entstehen oder entweichen können.

Die Erzeugung von Wärme durch die Adsorption von Wasser in dem Adsorptionsmittel wurde zuvor im Zusammenhang mit der Erwärmung der Brennkammer beschrieben.

Je nach Ausgestaltung des Adsorptionsmittels, den Wärmeleitungseigenschaften des Paneels und deren Größe kann eine größere Wärmemenge erzeugt werden, als zur Erwärmung der Brennkammer benötigt wird. In diesem Fall kann man diese Wärme abführen und in einen Wärmespeicher, beispielsweise in einem Heizungssystem, überführen.

Somit bestehen zahlreiche Möglichkeiten, die Energiebilanz durch entsprechende Konsumenten in dem Gebäude, in dem das Brennofensystem installiert ist, ausgeglichener zu gestalten. Auf diese Weise kann der bekannte erwünschte Deko-Effekt noch zusätzlich durch energiebilanzmäßige und sicherheitstechnische Vorteile ergänzt werden.

In einer weiteren Ausgestaltung der Erfindung weist der Brenner eine Brennerkassette auf, die über eine Leitung mit einer abseits der Brennkammer angeordneten Brennstoffmengenzuspeisung verbunden ist.

Diese Maßnahme hat den betriebstechnischen Vorteil dahingehend, dass in dem Brenner nur der Brennstoff verbrannt und nicht zugleich auf Vorrat gehalten wird. Bei dem anfänglichen Erwärmen der Brennkammer müssen dann nicht größere Mengen an Brennstoff vorgewärmt werden, sondern es muss nur der Brenner vorgewärmt werden, dem eine ganz bestimmte dosierte geringe Brennstoffmenge zugeführt wird, die sofort beim Anzünden des Ofens hervorragend abbrennt.

In einer weiteren Ausgestaltung der Erfindung ist das Brennofensystem als Kamineinsatz ausgebildet, dessen Frontblende einen Blick auf die Brennkammer freilässt, jedoch seitlich der Brennkammer angeordnete Bauteile abdeckt, und dennoch für Manipulationen zugänglich macht.

Diese Maßnahme hat den erheblichen Vorteil, dass neben der Brennkammer die entsprechenden Zusatzaggregate untergebracht werden können, um beispielsweise das Kältemanagement zu steuern oder zu regeln. Die Blende deckt all diese zusätzlichen Aggregate ab, so dass sich für den Betrachter lediglich das Erscheinungsbild eines Deko-Ofens präsentiert.

Dennoch sind - beispielsweise für Nachfüllvorgänge, für Inspektionszwecke oder sonstige Montagezwecke - diese Bauteile einfach zugänglich.

Der Ersteller des Gebäudes, insbesondere bei Fertighäusern, kann somit dieses Brennofensystem als Komplettmodul anbieten, das all die zuvor erwähnten Vorteile und Optionen aufweist, so dass - je nach Wunsch des Konsumenten - dieses System als autarkes System besteht oder mit entsprechenden kälteverbrauchenden Systemen, wie Kühlaggregaten, Klimaanlagen, etc., verbunden werden kann.

Dies bietet eine vielseitige Einsatzmöglichkeit bei einfacher und kompakter Konstruktion.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nachfolgend anhand ausgewählter Ausführungsbeispiele im Zusammenhang mit den beiliegenden Zeichnungen näher beschrieben und erläutert. Es zeigen:
- Fig. 1: stark schematisch ein erstes Ausführungsbeispiel eines erfindungsgemäßen Brennofensystems;
- Fig. 2: eine ebenfalls schematische Darstellung des Paneels mit dem Adsorptionsmittel sowie weiteren Bauteilen des Brennofensystems von Fig. 1;
- Fig. 3: einen Querschnitt durch den Brennofen über dem eigentlichen Brenner; und
- Fig. 4: stark schematisch eine Explosionszeichnung des eingesetzten Brenners.

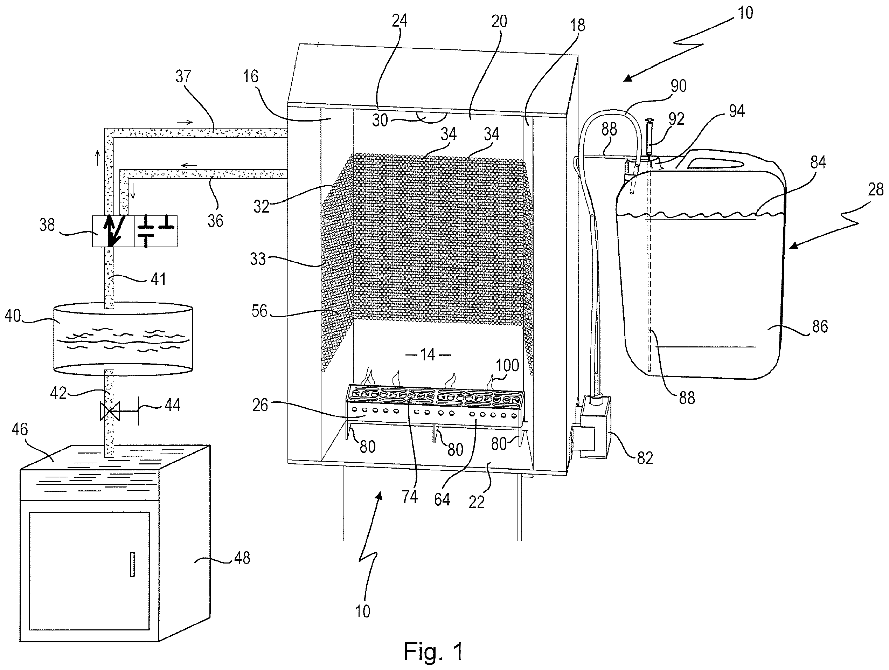

Ein in den Fig. 1 bis 4 dargestelltes Brennofensystem ist in seiner Gesamtheit mit der Bezugsziffer 10 bezeichnet.

Das Brennofensystem 10 weist einen Brennofen 12 auf, der eine innere Brennkammer 14 aufweist.

Die Brennkammer 14 ist durch zwei Seitenwände 16 und 18, eine Rückwand 20 und einen Boden 22 umgrenzt. Ein Deckel 24 bildet einen oberen Abschluss der Brennkammer 14.

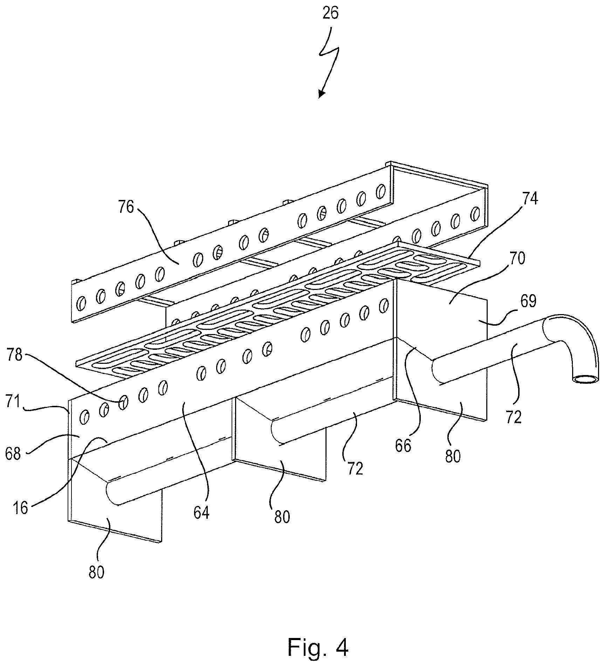

Auf dem Boden 22 steht ein Brenner 26, wie er in Zusammenhang mit Fig. 4 noch näher beschrieben wird.

Abseits der Brennkammer 14 ist eine Brennstoffmengenzuspeisung 28 angeordnet.

In der Rückwand 20 ist ein Kaminanschluss 30 vorhanden, d.h. in der Brennkammer 14 entstehende Verbrennungsgase können über den Kaminanschluss 30 in einen Kamin eintreten und von diesem abgeführt werden.

In der Brennkammer 14 ist ein grob U-förmiges Paneel 32 angeordnet, deren Innenraum 33 mit einem Adsorptionsmittel 34 gefüllt ist. Das Adsorptionsmittel 34 ist ein granulatförmiger Zeolith. Der von einem Gehäuse 35 aus wärmeleitendem feuerfesten Material umgebene Innenraum 33 ist hermetisch zur Außenwelt abgeschlossen und steht unter einem Unterdruck von zumindest 6,1 mbar, vorzugsweise nahe am Vakuum. Der Innenraum 33 des Paneels 32 ist über ein Lochblech 39 in eine Kammer zur Aufnahme des Adsorptionsmittels 34 und eine Wasserdampfströmungskammer 43 unterteilt. Wasserdampf kann über die Löcher 45 im Lochblech 39 an das Adsorptionsmittel herangeführt oder von diesem abgeleitet werden, je nach Betriebszustand. Die Wasserdampfströmungskammer 43 des Paneels 32 ist über eine erste Leitung 36 mit einem Ventil 38 verbunden, das über eine Leitung 41 mit einem Wasserkondensatbehältnis 40 verbunden ist. Das Ventil 38 ist als Zweiwege-Ventil ausgebildet, so dass es über eine zweite Leitung 37 ebenfalls mit dem Innenraum 33 des Paneels 32 verbunden ist.

In dem Wasserkondensatbehältnis 40 ist eine gewisse Menge an flüssigem Wasser enthalten.

Das Wasserkondensatbehältnis 40 ist über eine Leitung 42 und ein so genanntes Temperaturventil 44 mit einem Wärmeaustauscher 46 eines Kühlaggregates 48 verbunden, im dargestellten Ausführungsbeispiel einem Kühlschrank.

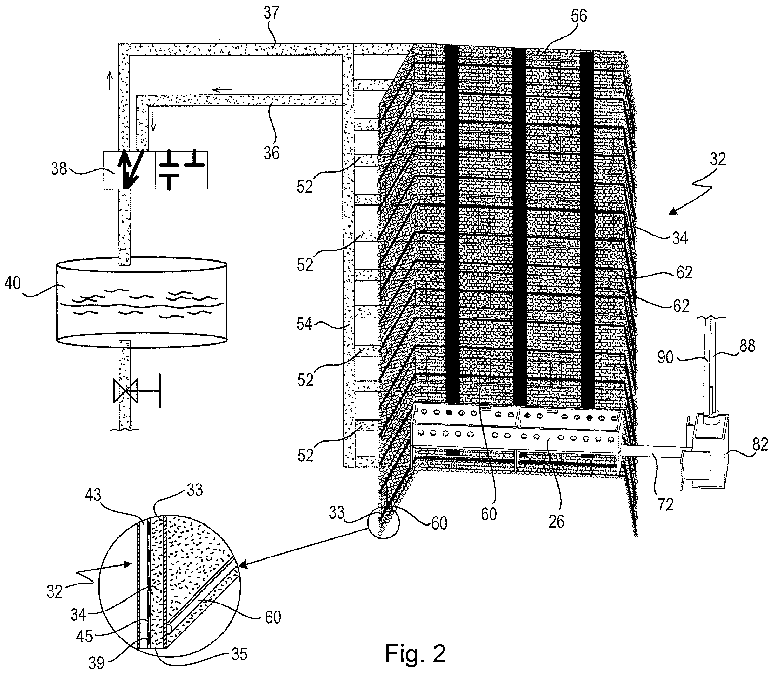

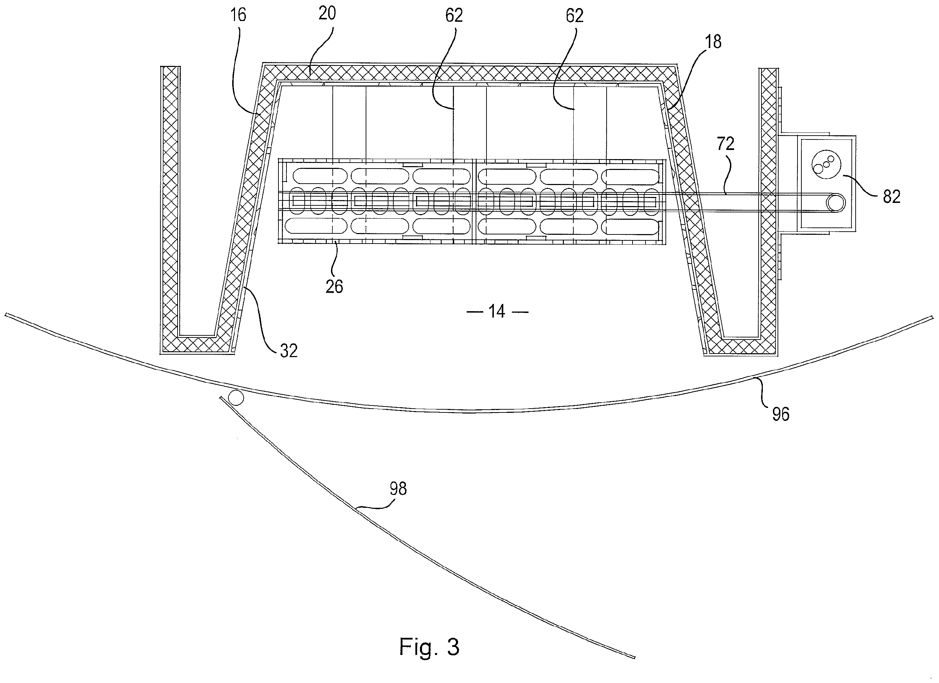

Wie insbesondere aus Fig. 1 und 2 sowie der Schnittdarstellung von Fig. 3 zu erkennen, ist das grob U-förmige Paneel 32 so ausgebildet, dass sie eine Auskleidung 56 der Brennkammer 14 im Bereich der Seitenwände 16 und 18 sowie im Bereich der Rückwand 20 darstellt.

In Fig. 1 ist durch die Kreise 34 das partikelförmige Adsorptionsmittel 34 angedeutet, das im Innenraum 33 des Gehäuses 35 des Paneels 32 aufgenommen ist.

Das Adsorptionsmittel im dargestellten Ausführungsbeispiel ist ein Zeolith, der die Eigenschaft zeigt, Wasserdampf extrem anzuziehen und in seine Kristallstruktur einzubauen.

Aus der Darstellung von Fig. 2 ist zu erkennen, dass sich das Paneel 32 über die gesamte Höhe der Rückwand 20 nahe bis zum Kaminanschluss 30 und entsprechend im Bereich der Seitenwände 16 und 18 erstreckt.

Das Paneel 32 ist über eine Vielzahl an Kanälen 52, die in den Innenraum 33 des Paneels 32 münden, mit einer Sammelleitung 54 verbunden. Die Sammelleitung 54 wiederum ist über die beiden Leitungen 36 und 37 mit dem Ventil 38 verbunden.

Aus Fig. 2 und auch aus der Schnittdarstellung von Fig. 3 ist zu erkennen, dass die der Brennkammer 14 zugewandte Außenseite 58 des grob U-förmigen Paneels 32 mit einer Vielzahl an horizontalen Lamellen 60 und mit diesen verbundenen vertikalen Lamellen 62 versehen ist.

Die Lamellen 60 und 62 sind aus einem gut wärmeleitenden Material, beispielsweise einem Metall, insbesondere einem kupferhaltigen Metall, ausgebildet und sorgen für einen raschen Wärmetransport von den in der Brennkammer 14 gebildeten Verbrennungsgasen zu dem Adsorptionsmittel 34 im Inneren des Paneels 32.

Der auf dem Boden 22 der Brennkammer 14 stehende Brenner 26 weist eine Brennerkassette 64 auf. In Fig. 4 ist eine Explosionsansicht der Brennerkassette ersichtlich. Die Brennerkassette 64 weist einen V-förmigen Boden 66 auf, der in einer unteren Rinne mündet. Der V-förmige Boden 66 ist von vier hochstehenden Wänden 68, 69, 70 und 71 umrundet, die alle etwa auf der gleichen Höhe enden.

Am untersten Punkt des V-förmigen Bodens 66 ist eine Zuführleitung für Brennstoff in Form eines Zuführrohrs 72 vorhanden, das an der oberen Seite mit hier nicht ersichtlichen Öffnungen versehen ist, über die Brennstoff in die Brennerkassette 64 eingeführt werden kann.

Ein Deckel 74 mit einem bestimmten Lochbild bildet einen oberen Abschluss der Brennerkassette 64.

Auf die Brennerkassette 64 ist ein Schieber 76 gesetzt, dessen hier nicht näher bezeichnete Seitenwände ein Lochbild aufweisen, das dem Lochbild von Luftzufuhröffnungen 78 in den Wänden 68 und 69 entspricht. Dieser Schieber 76 dient zur Luftzufuhrmengenregelung in den Innenraum der Brennerkassette 64, in der der Brennstoff, hier Bio-Ethanol, abbrennt. Aus Fig. 1 ist zu entnehmen, dass das Lochbild des Deckels 74 ein ganz bestimmtes Bild an Flammen 100 erzeugt.

Die Brennerkassette 64 steht über drei Füße 80 auf dem Boden 22 der Brennkammer 14.

Das Zuführrohr 72 ist durch die Seitenwand 18 hindurchgeführt und steht mit einer neben der Seitenwand 18 montierten Brennstoffmengenzuspeisung 28 in Verbindung.

Die Brennstoffmengenzuspeisung 28 weist einen Vorbehälter 82 auf, der über einen höher angeordneten Kanister 86 mit Brennstoff 84 verbunden ist. Diese Verbindung erfolgt über eine Brennstoffleitung 88, die etwa bis auf den Boden des Kanisters 86 reicht und über eine Krümmung mit dem Vorbehälter 82 in Verbindung steht. Somit strömt Brennstoff 84 aus dem Kanister 86 über das Prinzip der kommunizierenden Röhren in den Vorbehälter 82.

Um diesen Fluss insbesondere bei einem Kanisterwechsel sicherzustellen, ist eine Saugpumpe 92 vorgesehen, über die Brennstoff 84 in die Brennstoffleitung 88 eingesaugt werden kann. Darüber hinaus ist noch eine Belüftungsleitung 90 vorgesehen, die in den oberen, nicht von Flüssigkeit bedeckten Bereich des Kanisters 86 reicht und die ebenfalls in den Vorbehälter 82 eintaucht.

Die Brennstoffleitung 88, die Belüftungsleitung 90 und die Pumpe 92 sind in einem Deckel 94 des Kanisters 86 luftdicht durchgeführt und montiert. Die näheren konstruktiven Ausgestaltungen des Brenners 26 sowie der Brennstoffmengenzuspeisung 28 sind der parallelen Patentanmeldung der Anmelderin vom selben Tage zu entnehmen (Titel: Ethanolbrenner, insbesondere zum Verbrennen von Bio-Ethanol, Anwaltsaktenzeichen 4738P100WO), auf deren Inhalt hier ausdrücklich Bezug genommen wird.

Insbesondere aus der Schnittdarstellung von Fig. 3 ist zu erkennen, dass vor dem Brennofen 12 eine Blende 96 angeordnet werden kann, die über eine bewegliche Tür 98 Zugang zur Brennkammer 14 gewährt.

Die Tür 98 ist üblicherweise durchsichtig, zumeist aus Glas gefertigt, so dass von dem Betrachter die Brennkammer 14 eingesehen werden kann. Gleichzeitig ist zu erkennen, dass die Blende 96 die abseits der Brennkammer 14 angeordneten Bauelemente, wie Leitungen 50, 52, Wasserkondensatbehältnis 40 einerseits sowie die Brennstoffmengenzuspeisung 28 andererseits verblendet, so dass diese von der Außenseite nicht ersichtlich sind.

Dennoch kann die Blende 96 abnehmbar ausgestaltet sein, so dass einfach Zugang zu diesen Bauteilen gewährt ist, beispielsweise, um Reparaturen durchzuführen, oder um den Kanister 86 mit dem Brennstoff 84 auszuwechseln.

Der Brennofen 12 ist hier als Kamineinsatz 102 ausgebildet und kann als kompaktes vorgefertigtes Bauteil herstellerseitig angeliefert und somit einfach in einen entsprechend vorbereiteten Kamin eingesetzt werden.

Im Flammbetrieb wird die Brennerkassette 64 über die Brennstoffzuführleitung 72 mit flüssigem Brennstoff versorgt, und zwar mit einer ganz bestimmten geringen Menge, so dass sich auf dem V-förmigen Boden 66 ein bestimmtes Brennstoffmengenniveau etabliert. Die Neigung des "V" ist nur sehr gering, im Bereich von etwa 20°, so dass auch bei geringsten oder etwas schwankenden Brennstoffmengen sich in etwa eine gleiche Brennstoffoberfläche ausbildet, von der die Flammen 100 abbrennen.

Ist das Adsorptionsmittel 34 im Innenraum 33 des Paneels 32 mit Wasser beaufschlagt, so reicht die Temperatur der nach oben strömenden Verbrennungsgase, also Wasserdampf und Kohlendioxid, aus, um das Adsorptionsmittel 34 auf eine Temperatur zu erwärmen, die ausreicht, das Wasser aus dem Adsorptionsmittel 34 auszutreiben.

Dieser Wasserdampf wird über die zahlreichen Kanäle 52 der Sammelleitung 54 zugeführt und über die Leitung 36 und das in dieser Richtung offene Ventil dann dem Wasserkondensatbehältnis 40 zugeführt, in dem der Wasserdampf zu Wasser kondensiert und sich dort ansammelt.

Da es sich bei diesen Brennöfen 12 um einen so genannten Deko-Ofen handelt, sind in der Brennkammer 14 über der Brennerkassette 64, hier nicht dargestellte Holzscheitimitate, meist aus Keramik, angeordnet.

Die Flammen 100 umzüngeln diese Holzscheitimitate und geben dem Betrachter das Erscheinungsbild eines abbrennenden Holzscheites. Die Verbrennungsgase Wasser und Kohlendioxid werden über den Kaminanschluss 30 in einen Kamin abgeführt.

Nach dem Brennvorgang, oder wenn das Adsorptionsmittel 34 wasserfrei ist, kann das Ventil 38 geschlossen werden.

Ist der Brennofen 12 kalt, kann das Ventil 38 geöffnet werden, wonach über die Leitung 37 Wasserdampf von der Oberfläche des im Wasserkondensatbehältnis 40 enthaltenen Wassers abgesaugt und von dem Adsorptionsmittel, im dargestellten Ausführungsbeispiel Zeolith oder auch Silicagel, aufgenommen wird. Da das System Innenraum 33 des Paneels 32 und das Rohrleitungssystem 36 und 37 sowie das Wasserkondensatbehältnis 40 unter Unterdruck, möglichst nahe des Vakuums steht, erfolgt dieser Wasserdampfentzug so vehement, so dass sich das Wasser im Wasserkondensatbehältnis 40 abkühlt.

Der Einbau der Wassermoleküle in das Adsorptionsmittel 34 ist ein exothermer Vorgang, d.h. das Adsorptionsmittel 34 erwärmt sich, dadurch werden das Paneel 32 und die mit diesem wärmeleitend verbundenen Lamellen 60 und 62 erwärmt, und zwar - je nach Ausgestaltung - auf Temperaturen im Bereich von 80 bis 130 °C.

Dadurch werden die Brennkammer 14 sowie die auf dem Boden 22 stehende Brennerkassette 64 vorgewärmt. Hierdurch erfolgt eine Erwärmung des in der Brennerkassette 64 eingeführten Brennstoffs 84, nämlich Bio-Ethanol, so dass sich dort ein erhöhter Dampfdruck ausbildet. Es ist dann genügend dampfförmiges Ethanol vorhanden, dass der Brenner leicht entzündet werden und sofort mit einer günstigen Betriebstemperatur starten kann. Dadurch können Verpuffungen oder Geruchsbelästigungen durch Ethanoldämpfe beim Anlaufen des Brennvorganges vermieden werden.

Die in dem Wasserkondensatbehältnis 40 erzeugte Kälte kann nun an irgendeinen Wärmeaustauscher 46 eines Kühlaggregates 48 transportiert werden, und zwar über die Leitung 42 und ein so genanntes Temperaturventil 44.

Im dargestellten Ausführungsbeispiel ist das Kühlaggregat 48 Teil eines Haushaltskühlschranks.

Wie eingangs erwähnt, kann diese Kälte aber auch an andere Kälte benötigende Aggregate in einem Haus gebracht werden, beispielsweise eine Tiefkühltruhe, eine Klimaanlage oder dergleichen. Es ist auch möglich, einen Teil der Kälte dazu heranzuziehen, um beispielsweise den Raum, in dem der Kanister 86 aufgenommen ist, zu kühlen, so dass hier unerwünschte Verdunstungen des Brennstoffes 84 ausgeschlossen werden können.

Es ist ferner möglich, die über den Kaminanschluss 30 austretenden Verbrennungsgase zu kühlen. Im voranstehenden Ausführungsbeispiel wurde das Paneel 32 als eine etwa U-förmige Auskleidung 56 der Brennkammer 14 beschrieben.

Es ist auch denkbar, solche Adsorptionsmittel 34 enthaltende Bauelemente alternativ oder zusätzlich noch im Strömungspfad der heißen Verbrennungsgase vorzusehen, um dort weitere Masse an Adsorptionsmittel zur Verfügung zu stellen, das in dem Adsorptions/Desorptionszyklus mitwirken kann.

## Patentansprüche

1. Brennofensystem in Form eines Deko-Ofens zum Verbrennen von Ethanol, mit einer Brennkammer (14), die zumindest teilweise von einer Wand (16, 18, 20, 22, 24) umgeben ist, und mit einem bodenseitigen Brenner (26) zum Verbrennen von Ethanol (84), wobei ein abgeschlossenes Paneel (32) vorgesehen ist, dessen Innenraum (33) unter einem Unterdruck steht und das mit den heißen Verbrennungsgasen in wärmetauschender Verbindung steht, wobei im Innenraum (33) des Paneels (32) ein Adsorptionsmittel (34) aufgenommen ist, das Wasserdampf ansaugt und bei den Temperaturen der Verbrennungsgase wieder abgibt, wobei das Paneel (32) über eine Verbindung (36, 41) mit einem Wasserkondensatbehältnis (40) verbunden ist, wobei bei aktivem Adsorptionsmittel (34) durch Freigeben der Verbindung zwischen Adsorptionsmittel (34) und dem Wasserkondensatbehältnis (40) die Brennkammer (14) vorwärmbar ist, wobei das grob U-förmige Paneel (32) so ausgebildet ist, dass es eine Auskleidung (56) der Brennkammer (14) im Bereich der Seitenwände (16, 18) sowie im Bereich der Rückwand (20) darstellt.

2. Brennofensystern nach Anspruch 1, **dadurch gekennzeichnet, dass** das Paneel (32) zahlreiche Kanäle (52) aufweist, über die ein Wasserdampftransport von und zu dem Adsorptionsmittel (34) erfolgt.

3. Brennofensystem nach Anspruch 2, **dadurch gekennzeichnet, dass** das Paneel (32), über dessen Höhe gesehen, mehrere Kanäle (52) zum Wasserdampftransport aufweist.

4. Brennofensystem nach einem der Ansprüche 1. bis 3 **dadurch gekennzeichnet, dass** im Innenraum (33) des Paneels (32) ein Lochblech (39) eingesetzt ist, über das der Innenraum (33) in eine Wasserdampfströmungskammer (43) und eine das Adsorptionsmittel (34) enthaltende Kammer aufgetrennt ist.

5. Brennofensystem nach einem der Ansprüche 1 bis 4, **dadurch gekennzeichnet, dass** das Paneel (32) ein Gehäuse (35) aufweist, das wärmeleitend ausgebildet ist.

6. Brennofensystem nach einem der Ansprüche 1 bis 5, **dadurch gekennzeichnet, dass** das Paneel (32) einen vom Brenner (26) erzeugten Flammenherd zumindest um 180°, insbesondere bis zu 270°, umgibt.

7. Brennofensystem nach einem der Ansprüche 1 bis 6, **dadurch gekennzeichnet, dass** das Paneel (32) mit zur Brennkammer (14) weisenden wärmeleitenden Lamellen (60, 62) verbunden ist.

8. Brennofensysterm nach einem der Ansprüche 1 bis 7, **dadurch gekennzeichnet, dass** zwischen Paneel (32) und Wasserkondensatbehältnis (40) ein Ventil (38) angeordnet ist.

9. Brennofensystem nach einem der Ansprüche 1 bis 8, **dadurch gekennzeichnet, dass** das Wasserkondensatbehältnis (40) als Bauteil eines Kühlaggregates (48) ausgebildet ist.

10. Brennofensystem nach Anspruch 7 oder 8, **dadurch gekennzeichnet, dass** das Wasserkondensatbehältnis (40) über eine Leitung (42) mit einem Wärmeaustauscher (46) zumindest eines Kühlaggregates (48) verbunden ist.

11. Brennofensystem nach Anspruch 9 oder 10, **dadurch gekennzeichnet, dass** das Kühlaggregat (48) ein Kühlschrank, eine Tiefkühltruhe, ein Brennmittelkühler, ein Brenngaskühler, eine häusliche Klimaanlage, ein Kühlakku oder ein sonstiges in einem Gebäude Kälte benötigendes Gerät ist.

12. Brennofensystem nach einem der Ansprüche 1 bis 11, **dadurch gekennzeichnet, dass** der Brenner (26) eine Brennerkassette (64) aufweist, die über eine Leitung (72) mit einer abseits der Brennkammer (14) angeordneten Brennstoffmengenzuspeisung (28) verbunden ist.

13. Brennofensystem nach einem der Ansprüche 1 bis 12, **dadurch gekennzeichnet, dass** es als Kamineinsatz (102) ausgebildet ist, dessen abnehmbare Frontblende (96) einen Blick auf die Brennkammer (14) freilässt, jedoch seitlich der Brennkammer (14) angeordnete Bauteile abdeckt, und dennoch für Manipulationen zugänglich macht.

## Claims

1. Combustion heater system in the form of a decorative heater for burning ethanol, having a combustion chamber (14) which is at least partially surrounded by a wall (16, 18, 20, 22, 24), and with a bottom-side burner (26) for burning ethanol (84), wherein there is provided a closed panel (32) whose interior (33) is at reduced pressure and which is thermally connected to the hot combustion gases, wherein an adsorption material (34) is received in the interior (33) of the panel (32), which material draws in water vapour and releases it again at the temperatures of the combustion gases, wherein the panel (32) is connected to a water condensate container (40) via a connection (36, 41), wherein, when the adsorption material (34) is active, the combustion chamber (14) can be preheated by opening the connection between the adsorption material (34) and the water condensate container (40), wherein the approximately U-shaped panel (32) is designed such that it represents a lining (56) of the combustion chamber (14) in the region of the side walls (16, 18) and in the region of the rear wall (20).

2. Combustion heater system according to Claim 1, **characterized in that** the panel (32) has a number of channels (52) by which water vapour is transported from and to the adsorption material (34).

3. Combustion heater system according to Claim 2, **characterized in that** the panel (32), as seen over its height, has multiple channels (52) for transporting water vapour.

4. Combustion heater system according to one of Claims 1 to 3, **characterized in that** a perforated sheet (39) is inserted in the interior (33) of the panel (32), which sheet divides the interior (33) into a water vapour flow chamber (43) and a chamber containing the adsorption material (34).

5. Combustion heater system according to one of Claims 1 to 4, **characterized in that** the panel (32) has a housing (35) which is designed to conduct heat.

6. Combustion heater system according to one of Claims 1 to 5, **characterized in that** the panel (32) surrounds, over at least 180° and in particular up to 270°, a source of flames generated by the burner (26).

7. Combustion heater system according to one of Claims 1 to 6, **characterized in that** the panel (32) is connected to heat-conducting fins (60, 62) oriented towards the combustion chamber (14).

8. Combustion heater system according to one of Claims 1 to 7, **characterized in that** a valve (38) is arranged between the panel (32) and the water condensate container (40).

9. Combustion heater system according to one of Claims 1 to 8, **characterized in that** the water condensate container (40) is designed as a component of a cooling unit (48).

10. Combustion heater system according to Claim 7 or 8, **characterized in that** the water condensate container (40) is connected, via a line (42), to a heat exchanger (46) of at least one cooling unit (48).

11. Combustion heater system according to Claim 9 or 10, **characterized in that** the cooling unit (48) is a fridge, a freezer, a fuel cooler, a fuel gas cooler, a domestic air conditioning unit, a cold store or any other device in a building that requires cold.

12. Combustion heater system according to one of Claims 1 to 11, **characterized in that** the burner (26) has a burner cartridge (64) which is connected, via a line (72), to a fuel supply (28) arranged away from the combustion chamber (14).

13. Combustion heater system according to one of Claims 1 to 12, **characterized in that** it is designed as a fireplace insert (102) whose removable front plate (96) exposes the combustion chamber (14) but covers components arranged to the side of the combustion chamber (14), while leaving these accessible for handling.

## Revendications

1. Système de foyer sous la forme d'un foyer décoratif destiné à brûler de l'éthanol, avec une chambre de combustion (14), qui est entourée au moins en partie par une paroi (16, 18, 20, 22, 24), et avec un brûleur de fond (26) destiné à brûler de l'éthanol (84), dans lequel il est prévu un panneau fermé (32) dont l'espace intérieur (33) se trouve sous une dépression et qui est en liaison d'échange de chaleur avec les gaz de combustion chauds, dans lequel un agent adsorbant (34) est logé dans l'espace intérieur (33) du panneau (32), lequel aspire de la vapeur d'eau et la restitue aux températures des gaz de combustion, dans lequel le panneau (32) est relié par une liaison (36, 41) à un réservoir d'eau condensée (40), dans lequel, lorsque l'agent adsorbant (34) est actif, la chambre de combustion (14) peut être préchauffée par la libération de la liaison entre l'agent adsorbant (34) et le réservoir d'eau condensée (40), dans lequel le panneau grossièrement en forme de U (32) est configuré de telle manière qu'il représente un habillage (56) de la chambre de combustion (14) dans la région des parois latérales (16, 18) ainsi que dans la région de la paroi arrière (20).

2. Système de foyer selon la revendication 1, **caractérisé en ce que** le panneau (32) présente de nombreux canaux (52), par lesquels il se produit un transport de vapeur d'eau depuis et vers l'agent adsorbant (34).

3. Système de foyer selon la revendication 2, **caractérisé en ce que** le panneau (32), vu sur sa hauteur, présente plusieurs canaux (52) pour le transport de vapeur d'eau.

4. Système de foyer selon l'une quelconque des revendications 1 à 3, **caractérisé en ce qu'**une tôle perforée (39) est introduite dans l'espace intérieur (33) du panneau (32), par laquelle l'espace intérieur (33) est divisé en une chambre d'écoulement de vapeur d'eau (43) et une chambre contenant l'agent adsorbant (34).

5. Système de foyer selon l'une quelconque des revendications 1 à 4, **caractérisé en ce que** le panneau (32) présente un boîtier (35), qui est conducteur de la chaleur.

6. Système de foyer selon l'une quelconque des revendications 1 à 5, **caractérisé en ce que** le panneau (32) entoure au moins sur 180°, en particulier jusque 270°, un réseau de flammes produit par le brûleur (26).

7. Système de foyer selon l'une quelconque des revendications 1 à 6, **caractérisé en ce que** le panneau (32) est relié à des lamelles conductrices de la chaleur (60, 62) orientées vers la chambre de combustion (14).

8. Système de foyer selon l'une quelconque des revendications 1 à 7, **caractérisé en ce qu'**une soupape (38) est disposée entre le panneau (32) et le réservoir d'eau condensée (40).

9. Système de foyer selon l'une quelconque des revendications 1 à 8, **caractérisé en ce que** le réservoir d'eau condensée (40) est réalisé en tant que composant d'un groupe de refroidissement (48).

10. Système de foyer selon la revendication 7 ou 8, **caractérisé en ce que** le réservoir d'eau condensée (40) est relié par une conduite (42) à un échangeur de chaleur (46) d'au moins un groupe de refroidissement (48).

11. Système de foyer selon la revendication 9 ou 10, **caractérisé en ce que** le groupe de refroidissement (48) est un réfrigérateur, un congélateur, un refroidisseur de combustible, un refroidisseur de gaz combustible, une installation de climatisation domestique, un accumulateur de froid ou un autre appareil nécessitant du froid dans un bâtiment.

12. Système de foyer selon l'une quelconque des revendications 1 à 11, **caractérisé en ce que** le brûleur (26) présente un foyer cassette (64), qui est relié par une conduite (72) à une source de combustible (28) disposée à côté de la chambre de combustion (14).

13. Système de foyer selon l'une quelconque des revendications 1 à 12, **caractérisé en ce qu'**il est réalisé sous forme d'insert de cheminée (102), dont l'écran avant amovible (96) dégage un regard vers la chambre de combustion (14), mais recouvre des composants disposés latéralement à la chambre de combustion (14), et les rend quand même accessibles pour leur manipulation.
